Europäisches Patentamt

European Patent Office

Office européen des brevets

(19)

(11) Veröffentlichungsnummer : **0 063 165**
**B1**

(12) EUROPÄISCHE PATENTSCHRIFT

(45) Veröffentlichungstag der Patentschrift :
30.07.86

(21) Anmeldenummer : 81102956.0

(22) Anmeldetag : 16.04.81

(51) Int. Cl.⁴ : **F 16 B 2/24, B 31 B 1/68**

(54) Befestigungsklammer.

(43) Veröffentlichungstag der Anmeldung :
27.10.82 Patentblatt 82/43

(45) Bekanntmachung des Hinweises auf die Patenterteilung : 30.07.86 Patentblatt 86/31

(84) Benannte Vertragsstaaten :
AT BE CH DE FR GB IT LI LU NL SE

(56) Entgegenhaltungen :
FR-A- 1 138 818
FR-A- 1 334 087
GB-A- 843 061
GB-A- 921 388
GB-A- 985 012
US-A- 1 622 697

(73) Patentinhaber : Monacelli, Umberto
Via Milazzo 1
I-20552 Monza (IT)

(72) Erfinder : Monacelli, Umberto
Via Milazzo 1
I-20552 Monza (IT)

(74) Vertreter : Hoffmann, Klaus, Dr. rer. nat. et al
Hoffmann . Eitle & Partner Patentanwälte Arabellastrasse 4
D-8000 München 81 (DE)

EP 0 063 165 B1

**Beschreibung**

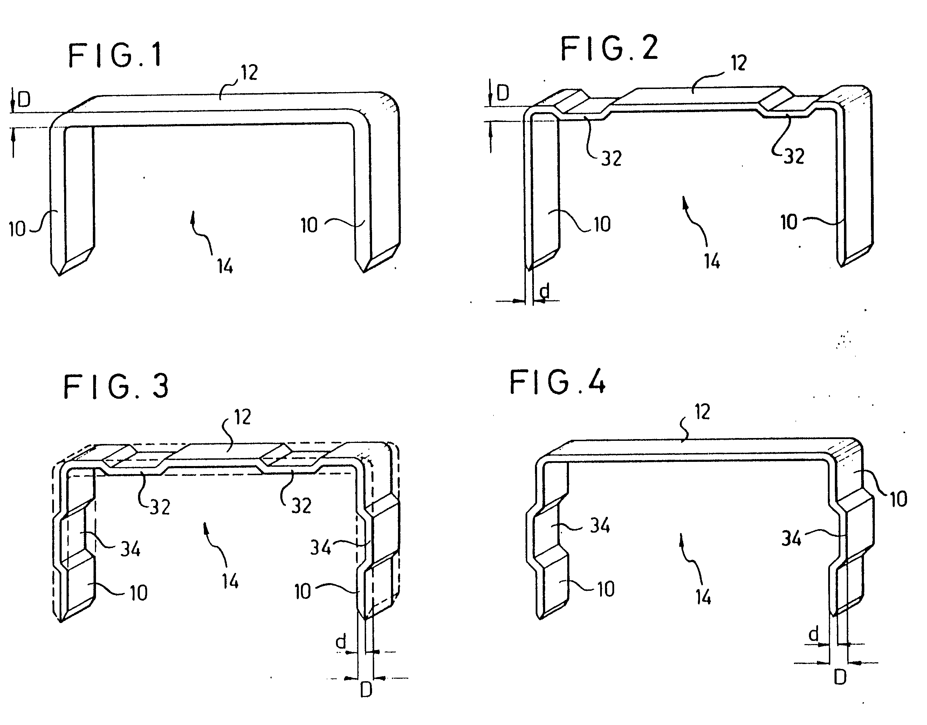

Die Erfindung bezieht sich auf eine Befestigungsklammer mit im allgemeinen U-förmiger Querschnittsform, beispielsweise als Heftklammer zum Anheften von Polsterstoffen an entsprechendes Trägermaterial, wie Holz oder dgl., und zum Verschließen von Faltkartons. Die Wände der allgemein bekannten Befestigungsklammer (siehe Figur 1), nämlich ein Verbindungssteg und zwei Schenkel, bestehen aus Blechmetall.

Derartige bekannte Heftklammern haben in einer bestimmten Größenordnung üblicherweise eine Wandstärke von 0,9 mm. Es sind jedoch Bestrebungen im Gange, durch entsprechende Materialänderung bzw. für bestimmte Verwendungsarten, bei denen auf die Klammer beim Eintreiben in weicheres Material geringere Kräfte ausgeübt werden, Klammern mit einer geringeren Wandstärke zu produzieren, da bei der Vielzahl von hergestellten Befestigungsklammern in erheblichem Maße Material eingespart werden kann, welches sich beispielsweise bei einer Reduzierung auf 0,7 mm im Bereich von 20 % bewegt. Im Zusammenhang mit einer derartigen Reduzierung der Wandstärke besteht jedoch das Erfordernis, derartige Befestigungsklammern funktionssicher in den Magazinen von Handhabungswerkzeugen verwenden zu können, die normalerweise für Heftklammern mit der üblichen Wandstärke ausgelegt sind.

Aus der GB-A-843 061 ist eine U-förmige Klammer bekannt, die in ihrem Steg so abgebogen ist, daß sie an ein rundes Teil anpaßbar ist und darüber hinaus Köpfe 3 und 4 gebildet werden, mit denen die Schenkel 1 und 2 angetrieben werden können. Somit dient die Ausbuchtung 5 gegenüber der Erfindung einem vollständig anderen Zweck. Dasselbe gilt für die GB-A-921 388, bei der die Klammer im Steg eine Ausbuchtung 4 aufweist, um einen flexiblen Stützstreifen 3 aufzunehmen.

Bei der GB-A-985 012 dient die Ausbuchtung 19 bzw. 25 nicht nur dem Einlegen eines Streifens 20 bzw. 26 zum ausgerichteten Zusammenhalten der Klammern, wie dies in Fig. 4 dargestellt ist, sondern entsprechend der Beschreibung auf Seite 2, Zeile 92-96, dem ausgerichteten Führen der Klammern im Magazin eines Klammerapparates, jedoch nicht im Sinne der vorliegenden Erfindung.

Daher besteht die Aufgabe der Erfindung darin, eine Befestigungsklammer zu schaffen, die in Magazinen von Handhabungswerkzeugen störungsfrei verwendet werden können, und zwar unabhängig von der jeweiligen Wandstärke der Befestigungsklammer.

Die Erfindung, wie sie in dem Anspruch 1 gekennzeichnet ist, löst diese Aufgabe.

Durch diese Maßnahme besteht die Möglichkeit, die entscheidenden Außenabmessungen der Heftklammer auf einem gleichbleibenden Maß zu halten, auch wenn unterschiedliche Wandstärken zur Anwendung kommen.

Die verformten Abschnitte sind in Abhängigkeit davon plaziert und geformt, in welchen Typen von Magazinen sie verwendet werden. Wird beispielsweise ein Magazin mit innerer Führung verwendet, so sind vorteilhafterweise die verformten Abschnitte in Richtung auf das Innere der Querschnittsform der Klammer ausgebildet, und zwar in Richtung auf das Innere der Querschnittsform der Klammer. Wenn als innere Führung eine U-förmige Gleit-Stützführung verwendet wird, bei der die Klammern auf den freien Schenkelenden dieser Gleit-Stützführung aufliegen und verschoben werden, so sind zwei in Richtung auf das Innere der Querschnittsform der Klammer ausgeformte Abschnitte vorgesehen, deren Abstand im wesentlichen dem der freien Stützschenkel der Gleit- und Stützführung entspricht.

Wird ein Magazin mit einer sogenannten äußeren Führung verwendet, so befinden sich vorteilhafterweise die ausgeformten Abschnitte in den freien Schenkeln der U-förmigen Klammer und sind vorteilhafterweise in Richtung auf das Äußere der Querschnittsform der Klammer ausgeformt, wobei es üblicherweise ausreicht, jeweils einen verformten Abschnitt vorzusehen.

Vorzugsweise haben die verformten Abschnitte ebenfalls eine im wesentlichen U-förmige Querschnittsform. Weitere besondere Ausführungsarten sind in die abhängigen Ansprüchen angegeben.

Weitere Einzelheiten, Merkmale und Vorteile der Erfindung werden in der nachfolgenden Beschreibung der in den Zeichnungen rein schematisch dargestellten Ausführungsbeispiele näher erläutert.

Es zeigt :

Figur 1 eine perspektivische Ansicht einer bekannten Heftklammer mit üblicher Wandstärke,

Figur 2 eine perspektivische Ansicht einer mit verformten Abschnitten versehenen Klammer mit reduzierter Wandstärke gemäß der Erfindung,

Figur 3 eine perspektivische Ansicht einer alternativen Ausführungsform einer mit verformten Abschnitten versehenen Klammer reduzierten Wandstärke, wobei zum Vergleich die projizierten äußeren Begrenzungslinien gestrichelt dargestellt sind und der Dimensionierung der bekannten Klammer gemäß Fig. 1 entsprechen,

Figur 4 eine noch weitere Ausführungsform einer mit verformten Abschnitten versehenen Klammer mit reduzierter Wandstärke,

Figur 5 eine schematische Schnittansicht eines Befestigungsklammern aufnehmenden vorschiebenden Magazins,

Figur 6 eine schematische Schnittansicht durch ein Magazin mit innerer und äußerer Führung im Zusammenhang mit Befestigungsklammern normaler Wandstärke,

Figur 7 eine schematische Schnittansicht des Magazins gemäß Figur 6 im Zusammenhang mit Befestigungsklammern reduzierter Wandstärke gemäß der Erfindung,

Figur 8 eine schematische Schnittansicht einers Magazin mit ausschließlich äußerer Führung im Zusammenhang mit Befestigungsklammern üblicher Wandstärke und

Figur 9 eine Schnittansicht durch das Magazin gemäß Fig. 8 im Zusammenhang mit Befestigungsklammern reduzierter Wandstärke.

In den Zeichnungen sind übereinstimmende Teile mit denselben Bezugszeichen versehen.

Die Befestigungsklammer sowohl der in Fig. 1 als auch der in Fig. 2 dargestellten Art hat eine U-förmige Querschnittsform und setzt sich aus zwei freien Schenkeln 10 und einem Verbindungssteg 12 zusammen.

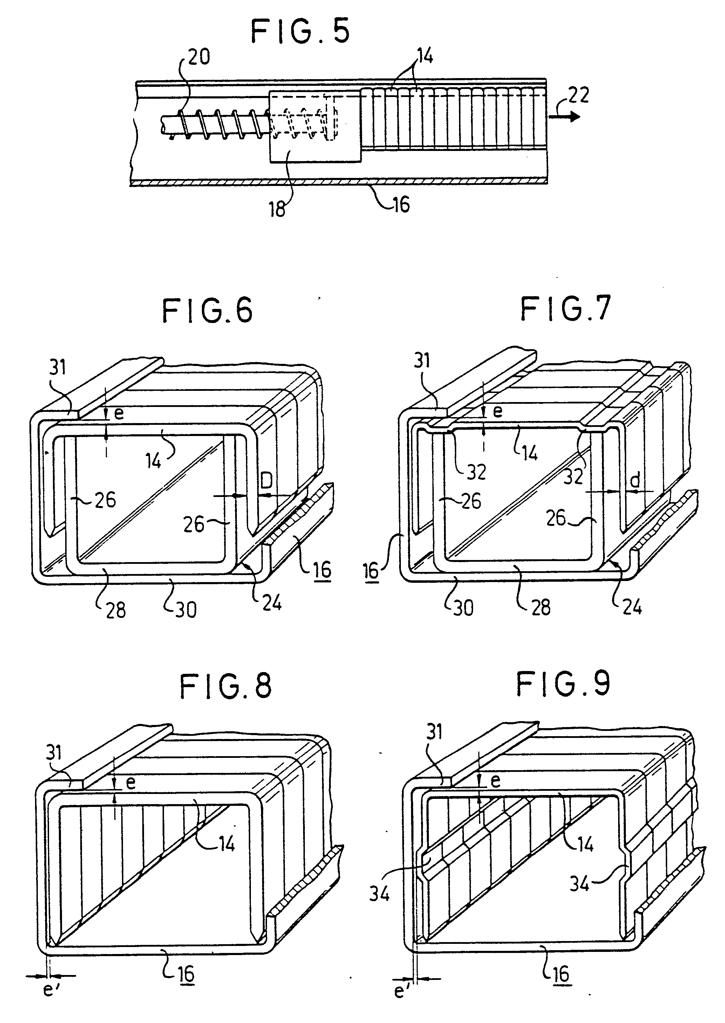

In einer bestimmten Größenordnung haben diese Befestigungsklammern 14 eine Wandstärke D. Wenn die Materialfestigkeit durch eine andere Materialzusammensetzung erhöht wird, oder wenn derartige Klammern beispielsweise für das Verschließen von Kartons oder zum Anheften von Gegenständen an ein Material verwendet werden, in das die Klammern nur mit einer geringen kraft eingetrieben werden müssen, so können derartige Befestigungsklammern entsprechend Fig. 2 bis 4 mit einer kleineren Wandstärke d hergestellt werden. Wenn aber derartige Befestigungsklammern in den Magazinen der auf dem Markt befindlichen Handhabungswerkzeuge verwendet werden, so treten gewisse Schwierigkeiten auf, die nachfolgend im Zusammenhang mit Fig. 5, 6 und 8 erläutert werden.

In Figur 5 ist ein derartiges Magazin rein schematisch dargestellt. Es besteht aus einem Gehäuse 16 und einem Schieber 18, welcher mittels einer Feder 20 vorbelastet ist, so daß unter Einwirkung des Schiebers 18 und der Feder 20 eine Reihe von Befestigungsklammern 14 in Richtung des Pfeiles 22 in Fig. 5 vorgespannt und weitertransportierbar sind.

In Fig. 6 und 8 sind zwei Arten von Magazinen dargestellt. Bei dem Magazin in Fig. 6 handelt es sich um ein solches mit innerer Führung und bei dem in Fig. 8 um ein solches mit äußerer Führung. Beim Magazin mit innerer Führung gemäß Fig. 6 liegen die Befestigungsklammern 14 mit ihrem Verbindungssteg auf einer U-förmigen Gleit-Stützführung 24, die aus zwei Stützschenkeln 26 und einem Verbindungssteg 28 besteht. Der Steg 28 liegt flächig auf dem Boden 30 des Magazingehäuses 16 an, so daß die Stützschenkel 26 in Richtung auf die Befestigungsklammern 14 gerichtet sind, so daß die Befestigungsklammern auf den Enden der Stützschenkel 26 aufliegen und auf diesen verschiebbar sind. Das Gehäuse 16 verläuft mit einem Flansch 31 an der dem Gehäuseboden 30 gegenüberliegenden Seite über die Enden der Stützschenkel 26, und zwar in einem Abstand, der um das Maß e in Fig. 6 größer ist als die übliche Wandstärke D der Befestigungsklammern (siehe Fig. 6). Wenn nun die Wandstärke der Befestigungsklammern 14 auf das Maß d reduziert wird, so würde sich dadurch ein um die Reduzierung vergrößerter Abstand e zwischen den Enden der freien Stützschenkel 26 und dem Flansch 31 einstellen. Dies führt jedoch dazu, daß sich insbesondere dann die im Magazin befindlichen Klammern verklemmen können, wenn diese voneinander gelöst sind. Dies bedeutet, daß derartige Klammern reduzierter Wandstärke in den üblichen Magazinen mit innerer Führung nicht verwendet werden können.

Dieser Nachteil wird durch eine Befestigungsklammer gemäß Fig. 2 vermieden. Im Bereich des Verbidungssteges 12 befinden sich zwei verformte Abschnitte 32, die in Richtung auf das Innere der U-förmigen Querschnittsform der Klammer 14 ausgeformt sind. Vorzugsweise haben diese Abschnitte ebenfalls eine U-förmige Querschnittsform. Die Tiefe dieser Abschnitte 32 ist so groß, daß die projizierten Außenabmessungen des Verbindungssteges 12 dem Maß D entspricht, d. h. der üblichen Wandstärke der in Fig. 1 dargestellten bekannten Befestigungsklammer.

Wie aus Fig. 7 ersichtlich ist, befinden sich die Abschnitte 32 in einem Abstand voneinander, welcher dem Abstand der Stützschenkel 26 voneinander entspricht, so daß diese Abschnitte 32 auf den Enden der Stützschenkel 24 aufliegen und somit für die Hauptabschnitte des Verbindungssteges 12 der in Fig. 2 und 7 dargestellten Befestigungsklammer das Maß e der Fig. 6 beibehalten wird. Dadurch ist gewährleistet, daß sich die Befestigungsklammern verminderter Wandstärke in solchen Magazinen nicht verklemmen, die an sich für Befestigungsklammern größerer Wandstärke ausgelegt sind.

In Fig. 8 ist das Magazin mit sogenannter äußerer Führung dargestellt, wobei die äußere Führung durch das Magazingehäuse 16 gebildet wird. Zwischen den Befestigungsklammern 14 normaler Wandstärke und der Gehäusewand wird normalerweise ein in Fig. 8 bezeichneter Abstand e' eingehalten. Wenn die Wandstärke der Befestigungsklammern reduziert wird, so würde sich normalerweise dieser Abstand e' vergrößern, was ebenfalls zu einem Verklemmen der Befestigungsklammern innerhalb des Magazins führen könnte. Deswegen sind entsprechend Fig. 4 und 9 die freien Schenkel 10 der Befestigungsklammern mit verformten Abschnitten 34 versehen, welche in Richtung auf das Äußere der U-förmigen Querschnittsform der Befestigungsklammern ausgeformt sind. Durch diese Maßnahme wird ebenfalls wiederum die projizierte Außenabmessung der freien Schenkel der Befestigungsklammern 14 auf ein Maß D gehalten, welches der üblichen Wandstärke D der entsprechenden Befestigungsklammern entspricht. Dadurch wird der vorgenannte Nachteil vermieden, wenn derartige Befestigungsklammern reduzierter Wandstärke in solchen Magazinen mit äußerer Führung verwendet werden, die für Befestigungsklammern mit größerer Wandstärke ausgelegt sind.

In Fig. 3 ist eine Befestigungsklammer reduzierter Wandstärke dargestellt, bei der sowohl im Verbindungssteg 12 als auch in den Schenkeln 10 die genannten verformten Abschnitte 32 und 34 ausgebildet sind. Die projizierten Außenabmessungen einer derartigen Befestigungsklammer sind durch gestrichelte Linien angedeutet, wobei diese gestrichelten Linien im Zusammenhang mit den fluchtenden ausgezogenen Linien eine Befestigungsklammer darstellen, wie sie sich aus Fig. 1 in ausgezogenen Linien ergibt.

Dies bedeutet, daß durch die verformten Abschnitte eine Befestigungsklammer reduzierter Wandstärke geschaffen wird, die ohne Schwierigkeiten und funktionssicher in solchen Magazinen verwendet werden kann, die für Befestigungsklammern mit größerer Wandstärke ausgelegt sind.

**Patentansprüche**

1. Befestigungsklammer mit im allgemeinen U-förmiger Querschnittsform, deren Wände, nämlich ein Verbindungssteg (12) und zwei Schenkel (10), aus Blechmetall bestehen, dadurch gekennzeichnet, daß im Verbindungssteg (12) und/oder in den Schenkeln (10) Abschnitte (32, 34) in der Querschnittsebene aus der Wandebene heraus verformt sind an Stellen, wo dieses zur störungsfreien Führung im Magazin (16) eines Klammerapparates erforderlich ist, so daß die projizierte Wandstärke (D) des betreffenden Abschnitts größer ist als dessen eigentliche Wandstarke (d).

2. Befestigungsklammer nach Anspruch 1, dadurch gekennzeichnet, daß die verformten Abschnitte (32) in Richtung auf das Innere der Querschnittsform der Klammer (14) ausgeformt sind.

3. Befestigungskammer nach Anspruch 1, dadurch gekennzeichnet, daß die verformten Abschnitte (34) in Richtung außerhalb der Querschnittsform der Klammer (14) ausgeformt sind.

4. Befestigungsklammer nach Anspruch 3, dadurch gekennzeichnet, daß die in Richtung außerhalb der Querschnittsform der Klammer (14) ausgeformten Abschnitte (34) in den freien Schenkeln (10) der Klammer (14) und/oder die in Richtung auf das Innere der Querschnittsform ausgeformten Abschnitte (32) in Verbindungssteg (12) der Klammer (14) angeordnet sind.

5. Befestigungsklammer nach Anspruch 1, dadurch gekennzeichnet, daß im Verbindungssteg (12) der Klammer (14) zwei in Richtung auf das Innere der Querschnittsform der Klammer (14) ausgeformte Abschnitte (32) ausgebildet sind, die entlang des Verbindungssteges (12) in einem Abstand angeordnet sind, der dem Abstand der Stützschenkel (26) für die Klammern (14) im Magazin eines Handhabungswerkzeuges entspricht.

6. Befestigungsklammer nach mindestens einem der Ansprüche 1 bis 5, dadurch gekennzeichnet, daß die verformten Abschnitte (32, 34) an sich ebenfalls eine im wesentlichen U-förmige Querschnittsform haben.

**Claims**

1. Fastening clamp having a generally U-shaped cross-sectional shape, the walls of which, that is to say a cross member (12) and two limbs (10), consist of sheet metal, characterised in that in the connection member (12) and/or in the limbs (12) sections (32, 34) in the cross-sectional plane are deformed out of the plane of the wall at positions where this is necessary for trouble-free guidance in the magazine (16) of a clamping apparatus, so that the projected wall thickness (D) of the relevant section is larger than its actual wall thickness (d).

2. Fastening clamp according to claim 1 characterised in that the deformed sections (32) are deformed outwardly in the direction of the interior of the cross-sectional form of the clamp (14).

3. Fastening clamp according to claim 1 characterised in that the deformed sections (34) are formed outwards in the direction of the exterior of the cross-sectional form of the clamp (14).

4. Fastening clamp according to claim 3 characterised in that the sections (34) formed outwardly in the direction of the exterior of the cross-sectional shape of the clamp (14) are arranged in the free limbs (10) of the clamp (14) and/or the sections (32) formed outwardly in the direction of the interior of the cross-sectional shape are arranged in the cross member (12) of the clamp (14).

5. Fastening clamp according to claim 1 characterised in that in the connection member (12) of the clamp (14) two outwardly formed sections (32) are formed in the direction of the interior of the cross-sectional shape of the clamp (14), which sections are arranged along the connection member (12) at a mutual spacing which corresponds to the spacing of the support limbs (26) for the clamps (14) in the magazine of a manual tool.

6. Fastening clamp according to at least one of claims 1 to 5 characterised in that the deformed sections (32, 34) as such have likewise a substantially U-shaped cross-sectional shape.

**Revendications**

1. Agrafe de fixation présentant en général une section en forme de « U » dont les côtés, à savoir une entretoise de liaison (12) et deux branches (10), consistent en tôle métallique, caractérisée par le fait que, dans l'entretoise de liaison (12) et/ou dans les branches (10), dans le plan de section et d'une manière issue du plan de la paroi, des parties (32, 34) sont déformées à des endroits, au niveau desquelles ceci est nécessaire au guidage non destructif d'une agrafeuse dans le magasin (16), de manière à ce que l'épaisseur (D) projetée de l'élément concerné soit supérieure à son épaisseur propre (d).

2. Agrafe de fixation selon la revendication 1, caractérisée par le fait que les parties déformées (32) sont formées en fonction de la configuration interne de la forme de section de l'agrafe (14).

3. Agrafe de fixation selon la revendication 1, caractérisée par le fait que les parties déformées (34) sont formées en fonction de la configuration externe de la forme de section de l'agrafe (14).

4. Agrafe de fixation selon la revendication 3, caractérisée par le fait que les parties formées (34) dirigées vers l'extérieur de la forme de section de l'agrafe (14) sont aménagées dans les branches libres (10) de l'agrafe (14) et/ou les parties formées (32) dirigés vers l'intérieur de la forme de section dans l'entretoise de liaison (12) de l'agrafe (14).

5. Agrafe de fixation selon la revendication 1, caractérisée par le fait que dans l'entretoise de liaison (12) de l'agrafe (14), deux parties formées (32) sont dirigées vers l'intérieur de la forme de section de l'agrafe (14), parties aménagées le long de l'entretoise de liaison (12) à une distance qui correspond à la distance des branches de support (26) pour les agrafes (14) dans le magasin d'un outil de manutention.

6. Agrafe de fixation selon au moins une des revendications 1 à 5, caractérisée par le fait que les parties déformées (32, 34) présentent également une forme de section essentiellement en forme de « U ».

FIG.1

FIG.2

FIG.3

FIG.4

0 063 165

**0 063 165**

FIG. 5

FIG.6

FIG.7

FIG.8

FIG.9

2